# EUROPEAN PATENT SPECIFICATION

(11) **EP 2 100 172 B1**
(45) Date of publication and mention of the grant of the patent: **16.04.2014**
(21) Application number: 07827067.5
(22) Date of filing: 28.11.2007
(51) Int. Cl.: G02B 6/00, F21V 8/00, H04N 5/64

(54) **A RIM SYSTEM FOR A DISPLAY**
RANDSYSTEM FÜR EINE ANZEIGE
SYSTÈME DE BORDURE POUR AFFICHAGE

(30) Priority: 30.11.2006 EP 06125099
(43) Date of publication of application: 16.09.2009
(73) Proprietor: TP Vision Holding B.V., 5656 AE Eindhoven (NL)
(72) Inventor: KRIJN, Marcellinus P. C. M., 5656 AE Eindhoven (NL); SALTERS, Bart A., 5656 AE Eindhoven (NL); HOOGENSTRAATEN, Willem F. J., 5656 AE Eindhoven (NL)
(74) Representative: Nederlandsch Octrooibureau
(86) International application number: PCT/IB2007/054814
(87) International publication number: WO 2008/065614

(56) References cited:
- EP-A- 1 379 082
- EP-A- 1 551 178
- WO-A-03/056369
- WO-A-2005/076602
- WO-A-2006/003603
- WO-A-2007/026285
- DE-U1-202005 008 776
- GB-A- 534 973
- JP-A- 54 069 014
- US-A- 2 837 734
- US-A1- 2005 135 116
- A. GOSH, M. TRENTACOSTE, H. SETZEN, W. HEIDRICH: "Real Illumination from Virtual Environments" EUROGRAPHICS SYMPOSIUM ON RENDERING, 2005, pages 1-9, XP002469893

## Description

### FIELD OF THE INVENTION

The present invention relates to a rim system for a display, and to a display system comprising the rim system attached to the periphery of the display system.

### BACKGROUND OF THE INVENTION

Ambilight is a concept that enhances the viewing experience when watching TV by applying ambient lighting in order to extend the image outside the boundaries of the TV screen. This concept has been introduced in the market recently and found to have a tremendous positive impact on the sales of high-end LCD's equipped with this feature.

In the Ambilight concept, as it is implemented at present, by means of e.g. low-pressure gas-discharge lamps such as CCFL (cold-cathode-fluorescence) lamps located behind the TV set, an extension of the image is projected on the wall behind the TV. Each lamp can be considered to create a 'pixel' of light on the wall behind the display (or on a dedicated diffusely reflecting or diffusely transmitting screen attached to the display). The intensity of each of the lamps can be varied independently and is derived from the actual video information according to a certain algorithm. In principle, this is done on a frame-to-frame basis.

In the existing ambilight TV sets the image produced by the display and the Ambilight image on the wall behind the TV is not joined together, but is interrupted by the rim of the display. This can easily result in tiredness due to prolonged viewing.

WO01/17240 discloses a frame comprising blue light sources, where the intensity of these sources is controlled remotely. This reference is aimed at the effective method of fatigue reduction during the TV image viewing. The invention is based on the fact that blue light has physiological effect: reduction of arterial blood pressure, reduction of pulse rate (G.P. Popov, "Engineering psychology in radiolocation", Moscow, 1971 (in Russian)). The brightness of the displayed image and the intensity of the ambient light are analyzed and, according to the results, the brightness of the external lighting is controlled by means of a remote control or automatically. The light sources are disposed so as to avoid flaring of the image on the screen. In this reference the lighting pattern generated by the perimeter of the screen only responds to the brightness of the ambient light or input from a remote control. It does not respond to the information displayed by the screen. In case the ambient lighting conditions do not change, the lighting pattern is static in intensity and color.

WO 2005/076602 A1 discloses a rim system for a display, comprising at least one controllable light source adapted for emitting a light beam of at least one weight length, a light guide comprising an inner and an outer side and a front and a backside, the light guide being adapted for guiding an incoming light beam emitted by the light sources, the light guide comprising an out-coupling structure for interacting with the light beam guided within the light guide such that the light beam becomes extracted out of the front side of the light guide, at least one image analyzer for determining color information of the viewing region of the display and a control unit for utilizing the detected color information for controlling the emission color from the at least one controllable light source such that the emission color corresponds to the detected color at the periphery viewing region of the display, wherein the at least one controllable light source is coupled to the light guide such that the emitted light beam reaching the inner and the outer sides from within the light guide becomes reflected under an oblique angle with the respect to the inner and the outer sides.

### BRIEF DESCRIPTION OF THE INVENTION

The object of the present invention is to provide a rim system for a display that is adapted to emit uniform light. The object of the invention further relates to providing a display system comprising the rim system.

According to one aspect the present invention relates to a rim system for a display, comprising:
- at least one controllable light source adapted for emitting a light beam of at least one wavelength;
- a light guide having a geometry selected such that when mounted to the display the light guide forms a frame that peripherally surrounds the viewing region of the display, the light guide comprising an inner and an outer side and a front and a back side, the light guide being adapted for guiding incoming light beam emitted by the light sources, the light guide comprising an out-coupling structure for interacting with the light beam guided within the light guide such that the light beam becomes extracted out of the front side of the light guide,
wherein the at least one controllable light source is coupled to the light guide such that the emitted light beam reaching the inner and the outer sides from within the light guide becomes reflected under an oblique angle with the respect to the inner and the outer sides; and
wherein said control unit is adapted to utilize the detected color information to extend the present image on the frame to at least said light guide, so that the frame structure acts as an extension of the display image, wherein the rim system further comprises controllable ambilight sources placed at the outer side of the light guide for emitting the light away from the rim system to the ambiance.

Since the light that hits the inner side and outer side of the light guide under an oblique angle, it becomes reflected towards the opposite site of the light guide and thus will travel a larger distance within the light guide before being coupled out therefrom. This will result in that the homogeneity of the light coupled out of the light-guide will be much better. A further advantage thereof is that fewer light sources will be needed, and/or the density of the out-coupling structure can be much less.

In one embodiment, the rim system further comprises a light reflecting means placed adjacent to the backside of the light guide.

Thus, all the light that is accidentally reflected out from the back side instead of the front side from the light guide will be reflected back into the light guide and out from the front side.

In one embodiment, the inner or the outer side of the light guide, or the combination thereof, is provided with a light reflecting means.

In that way, it is ensured that most of the light beam reaching the sides of the light guide from within the light guide will be reflected back into the light guide. Thus, a negligible amount of light will be conducted out of the light guide from the sides.

In one embodiment, the light reflecting means is selected from the group of:
- a mirror;
- a metallic coating;
- a multilayer of dielectric materials.

In one embodiment, the light guide is made of transparent plastic material or glass having an index of refraction being larger than that of the adjacent medium surrounding the light guide, the at least one controllable light source being coupled to the rim system such that the emitted light beam reaching the inner and the outer sides of the light guide becomes totally reflected.

The light reflecting means is thereby not needed, the law of total internal reflection will be implemented to ensure that the light will be maintained within the light guide similar as in a fiber optic cable until it interacts with the out-coupling structure.

In one embodiment, the at least one controllable light source comprises Light Emitting Diodes (LEDs).

It is therefore possible to implement a flat and thin surface (light guide) that is illuminated by LEDs such that the emitted light towards a view becomes uniform or in a "pixilated" fashion.

In one embodiment, the at least one controllable light source comprises Light Emitting Diodes (LEDs), the system further comprising a light mixer comprising a first end into which at least two LEDs having different wavelengths are coupled and a second end coupled to the light guide, the arrangement between the two or more LEDs and the first end being such that the light overlaps within the light guide prior to being conducted to the light guide via the second end.

Since the LEDs are nearly point-like light sources it will be possible to generate and mix the light prior to the entry into the light guide in case e.g. white light is required. In that way, the light of different colors is already mixed prior to being conducted into the light guide.

In one embodiment, the inner or the outer side of the light guide, or the combination thereof, is formed by repetition of wedge shaped structures comprising grooves at the top of the structures in relation to the opposite side of the light guide into which at least one light sources is integrated, the configuration of the light sources in the grooves being such that the emitted light from the light sources becomes reflected with at least one adjacent side of the wedge shape structure into the light guide.

In one embodiment, the shape of the inner or the outer side of the light guide, or both the inner and the outer side, is formed by step-wise structures formed by repetition of first and second surfaces, the placement of the at least one light source comprising attaching the light sources to the first or the second surface.

In one embodiment, the rim system further comprises:
- at least one image analyzer for determining color information from an incoming video signal or the display;
- a control unit for utilizing the detected color information for controlling the emission color from the LEDs such that the emission color corresponds to the detected color at the periphery of the display.

In that way, the light detected at the periphery of the display will be converted directly into the light guide.

In one embodiment, the rim system further comprises:
- at least one image analyzer for determining color information of the present image frame;
- a control unit for utilizing the determined color information for extending the present image on the image frame to at least the light guide.

In one embodiment, the rim system further comprises:
- a memory for storing a pre-defined amount of image frames;
- a delay mechanism for delaying the sending of the image frames to the display;
- an image analyzer for determining color information from the stored image frames; and
- a control unit for utilizing the determined color information for extending the image to at least the light guide when displaying the images frames.

Thereby, it is possible to extend the image being displayed on the display to the frame structure. Thus, the frame structure acts as an extension to the display.

In one embodiment, the rim system further comprises:
- at least one image analyzer for determining color information from an incoming video signal or the display;
- at least one ambiance analyzer for detecting the ambience color information;
- a control unit for utilizing the detected display and ambience color information for controlling the emission color from the at least one light source such that the emission colors are adapted to the display and the ambience color information.

In that way, the light detected at the periphery on the display and the ambience will be converted directly into the light guide, thereby allowing a smooth transition between the infotainment displayed on the actual display and the ambilight infotainment projected e.g. onto the wall located behind the display.

In one embodiment, the light guide comprises two or more sub-light guides mounted together.

Thereby, an array of sub-light guided can be formed, which makes the light guide more pixel-like.

In one embodiment, the out-coupling structure is selected from the group of: an array of dots of white paint, an array of grooves.

In one embodiment, the rim system further comprises controllable ambilight sources placed at the outer side of the light guide for emitting the light away from the rim system to the ambiance.

Thus, a rim system is provided that is capable of extending in a continuous way the ambience infotainment displayed on the actual display to the ambience e.g. the wall located behind the display, such that no "gap" is formed between the display and the ambience.

According to another aspect, the present invention relates to a display system comprising said rim system attached to the periphery of the display.

In one embodiment, the display system comprises a TV monitor or a computer screen monitor.

In one embodiment, the TV monitor or the computer screen monitor further comprises one or more controllable ambilight light sources adapted to project light in the ambience around the monitors.

The aspects of the present invention may each be combined with any of the other aspects. These and other aspects of the invention will be apparent from and elucidated with reference to the embodiments described hereinafter.

### BRIEF DESCRIPTION OF THE DRAWINGS

Embodiments of the invention will be described, by way of example only, with reference to the drawings, in which:
Figure 1 shows a rim system for a display according to the present invention;
Figure 2 illustrates graphically an extension of the infotainment in a display through the rim system over to the ambience;
Figure 3 shows a top/side view of one embodiment of light guide;
Figures 4-6 show three embodiments of light guides according to the present invention;
Figures 7-8 show a cross-section of two embodiment of a light guide according to the present invention;
Figure 9 shows one example of a light mixer having an entrance to which two or more LEDs (or light sources) are coupled; and
Figures 10-12 show three embodiment of a rim system according to the present invention.

### DESCRIPTION OF EMBODIMENTS

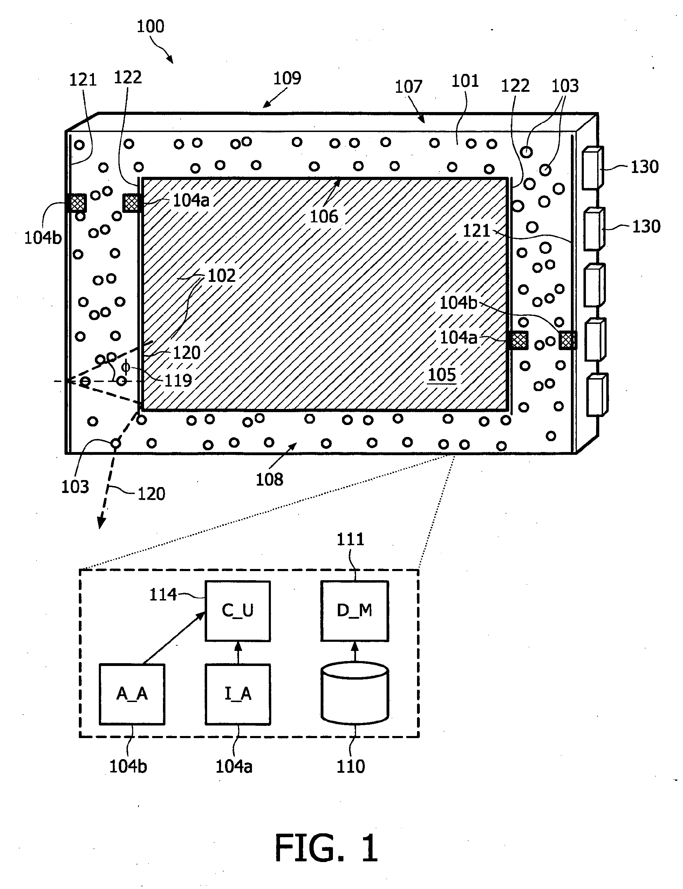

Figure 1 shows a rim system 100 for a display 105, e.g. LCD or PDP, comprising at least one controllable light source 102 adapted for emitting a light beam 120 of at least one wavelength, a light guide 101 comprising an inner 106 and an outer side 107 and a front 108 and a back side 109 adapted for guiding incoming light emitted by the light sources 102. This light guide 101 comprises an out-coupling structure 103 for interacting with the light guided within the light guide 101 such that the light becomes extracted out of the front side 108 of the light guide 101. In one embodiment, the out-coupling structure is selected from the group of an array of dots of white paint and/or an array of grooves. The at least one controllable light source is coupled to the light guide such that the light beam 120 emitted by the light sources 102 reaching the inner 106 and/or the outer sides 107 from within the light guide 101 becomes reflected under an oblique angle 119 with respect to the inner and the outer sides.

In one embodiment, the index of refraction of the light guide 101 is larger than that of the adjacent medium surrounding the light guide. The light reflecting means is thereby not needed, the law of total internal reflection will be implemented to ensure that the light will be maintained within the light guide similar as in a fiber optic cable until it interacts with the out-coupling structure 103.

In another embodiment where this is not required, the inner 106 and the outer side 107 of the light guide is provided with light reflection means 121, 122, e.g. a mirror, a metallic coating, a multilayer of dielectric materials, and the like, for maintaining the light beam 120 within the light guide. Thus, the only possibility for the light beam 120 to be conducted out of the light guide 101 is when it interacts with the out-coupling structure 103.

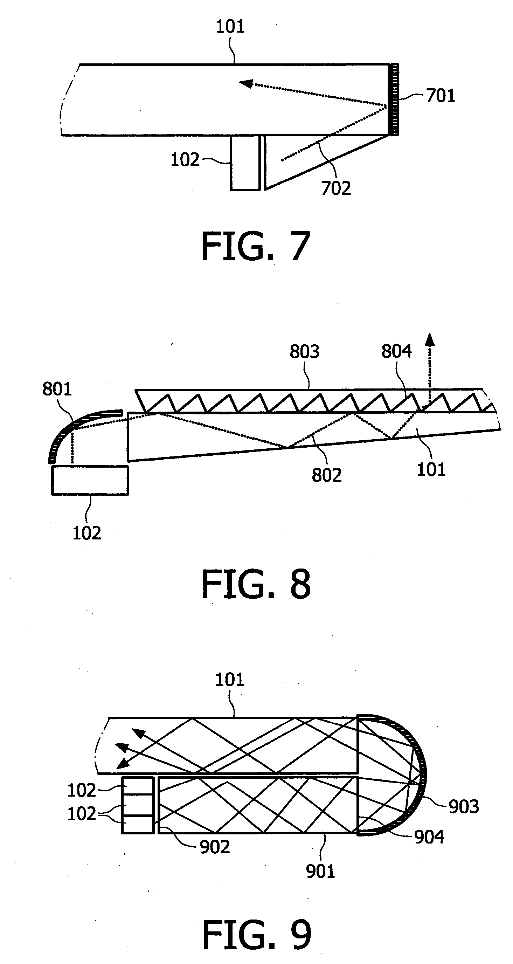

In one embodiment, the light source 102 comprises Light Emitting Diodes (LEDs) where each respective diode is adapted for emitting light of at least one wavelength. The emitted wavelength may e.g. be blue, green and red. The LEDs may be adapted to emit light of one or more wavelengths meaning that one and the same LED emits e.g. red, green and blue light. In case the LEDs emit light of only one wavelength, it is preferred that one group emits red light, one emits green light and one emits blue light. Preferably, the LEDs that emit said red, blue and green lights are arranged together at localized areas or adjacent to each other for enabling mixing of light. As an example, if the LEDs are arranged along the frames structure as shown in Fig. 1, it might be preferred that the LEDs form a repetition of a sequence of red, green and blue LEDs. A mixing of light may also be obtained by using a light mixer as shown in Fig. 9. This will be discussed in more details later.

In one embodiment, the system 100 further comprises at least one image analyzer 104a for analyzing an incoming video signal or the display for determining color information from the displayed image on the display. In the embodiment shown here, the image analyzer 104a is situated at the inner side 106 of the light guide 101 for detecting the display color information at the periphery of the display 105, and a control unit (C_U) 114 for utilizing the detected color information for controlling the emission color from the LEDs 102 such that the emission color from the LEDs corresponds to the detected color at the periphery of the display 101. Thus, the colors at the periphery will be extended to the light guide 101. Such an image analyzer comprises an algorithm known from prior art that is adapted to determine from e.g. a video content what color and luminance to send to each pixel of the light guide.

In one embodiment, the image analyzer 104a is adapted to analyze the color information at the present image, and the control unit (C_U) 114 utilizes the determined color information to extend the present image on the image frame to at least the light guide 101 so that the frame structure acts as an extension to the display image 105. It might be required to process the analyzed image for making predictions about the extension of the image. Thus, the processing of the images and the extension to the light guide is performed approximately in real time.

In one embodiment, the system further comprises a memory 110 for storing pre-defined amount of image frames and a delay mechanism (D_M) 111 for delaying the sending of the images frames to the display 105. In this embodiment, said image analyzer 104a may be used for determining the color information of the stored image frames. The control unit (C_U) 114 then utilizes the determined color information for extending the image to at least the light guide 101 when displaying the images frames 105. Thus, the processing of the image and the extension to the light guide is performed with some delay.

In one embodiment, the rim system 100 further comprises at least one ambiance analyzer (A_A) 104b which may be e.g. arranged at the outer side of the light guide, such as preferably substantially opposite to the image analyzer 104a, for detecting the ambience color information. The control unit (C_U) 114 utilizes the detected display and ambience color information for controlling the emission color from the LEDs 102 such that the emission colors are adapted to the display 105 and the ambience color information. Thus, the light detected at the periphery on the display 105 and the ambience will be converted directly into the light guide 101, thereby allowing a smooth transition between the infotainment displayed on the actual display 105 and the ambilight infotainment projected e.g. onto the wall located behind the display.

The light guide 101 may be made of a transparent plastic material such as PMMA, but other kinds of materials may be used such as glass. In one embodiment, the thickness of the light guide 101 is 2mm or less. Thicknesses above 2mm are however also possible.

In one embodiment, sand blasting is used to generate the pattern of the out-coupling structure 103 for e.g. forming fine dots into the PMMA. Thus, the dots act as a diffuser and couple out the light. The diameter of the dots may vary over the light guide such as to ensure a more or less homogeneous distribution; this might mean that in the neighborhood of the LEDs the dots are small and become larger farther away from the LEDs.

Also silk-screening may be used to make a fine pattern of diffusing or reflecting dots of white paint. The advantage of this method is that it is very economical.

It should be noted that the light sources can of course additionally be situated on the upper and the lower side of the light guide 101 (not only on the left and right side), or only on the upper and lower side of the light guide 101, or on both the inner 106 and the outer 107 side of the light guide.

Further, the out-coupling structure 103 shown here does not have any pre-defined pattern. As mentioned here above, various types of patterns may be implemented, e.g. a matrix like pattern, depending on e.g. the size/dimension of the light guide 101.

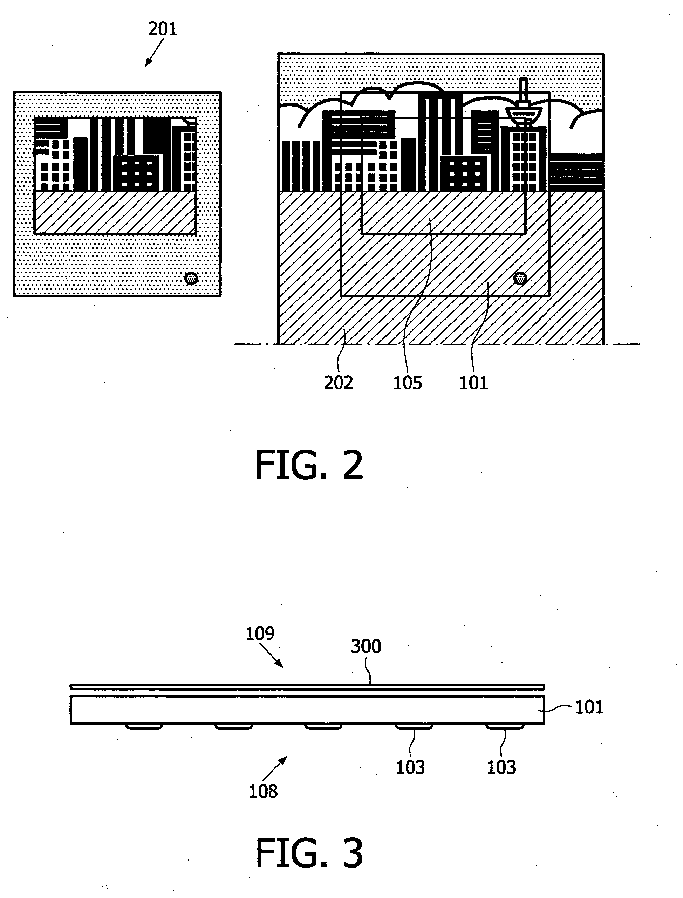

Figure 2 illustrates graphically said extension of the infotainment in the display 105 through the rim system 100 over to the ambience 202, e.g. the wall behind the display 105. In this case, the display may e.g. be a television screen, or a computer screen comprising high resolution, the light guide 101 typically has a medium resolution, and the ambience, e.g. the wall behind the TV set, has low resolution. For comparison is shown prior art display 201. As illustrated here, the extension of the image from the light guide over to the ambience acts as an extension of the infotainment.

Figure 3 shows a top/side view of one embodiment of light guide 101 showing also the out-coupling structure 103. In this embodiment, a light reflecting means 300 is provided and placed adjacent to the backside of the light guide. This is for preventing that the light that is accidentally reflected out from the back side 107 instead of the front side 108 from the light guide will be reflected back into the light guide and out from the front side. The light reflection means 300 may e.g. comprise a mirror, a metallic coating, a multilayer of dielectric materials, and the like.

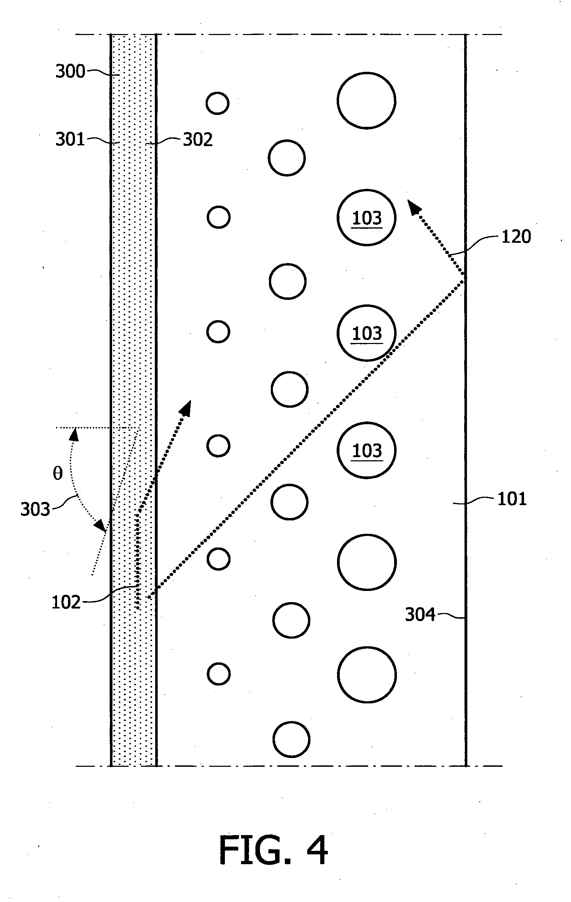

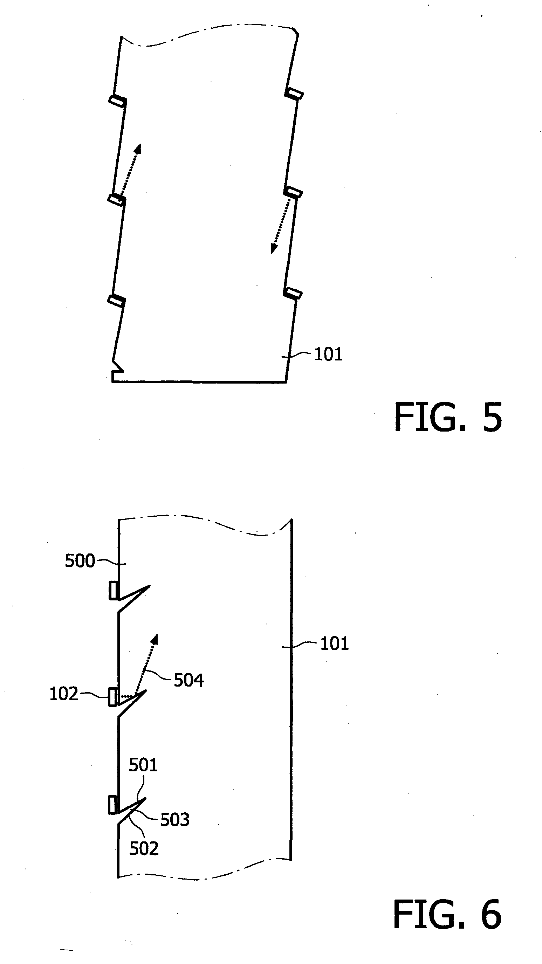

Figure 4 shows a portion of the light guide 101 showing also the light sources 102 emitting light beam 120 and a layer (e.g. a diffuser) 300 for masking the visibility of the light sources. Such a diffuser 300 may also be provided for masking the visibility of the out-coupling structure 103. In this embodiment, the light guide 101 has a repetitive stepwise structure consisting of repetitions of first 301 and second surfaces 302, wherein the normal of the second surfaces has an angle position 303 in relation to the opposite flat surface 304. The light sources 102 are attached to the second surfaces 302 such that the emitted light beam 120 hits the opposite surface 340 under said oblige angle. In the embodiment in Fig. 5, a similar light guide 101 is shown, but in this embodiment, the opposite surface (marked as 304 in Fig. 4) has a similar stepwise structure.

Figure 6 shows yet another embodiment of the light guide 101, where the one side of the light guide 101 comprises grooves 503 having a first 501 and a second 502 side. As shown here, the light sources are situated substantially parallel to the surface and the opposite surface and substantially above the grooves 503 such that the emitted light beam 504 will first hit the first surface 501 under such an angle that the light beam 504 becomes reflected into the light guide 101. Although not shown here, this light guide may also be provided with a diffuser 300 for masking the light sources and the out-coupling structure.

Figure 7 shows a cross-section of the light guide 101 according to the present invention where a substantial flat light reflecting means 701, e.g. of the type as discussed previously, is situated at the end of the light guide for reflecting the emitted light beam 702 into the light guide 101.

Figure 8 shows another embodiment of such a cross-section of the light guide 101 where the light reflecting means 801 is curved shaped and reflects the emitted light beam 802. In this embodiment a re-direction foil 803 is provided comprising a number of out-coupling structures, which in the embodiment are grooves 804. The light beam will be reflected back and forth within the light guide (e.g. based on the law of total reflection) until it hits the grooves and becomes coupled out of the light guide.

Figure 9 shows one example of a light mixer 901 having an entrance 902 to which two or more LEDs (or light sources) are coupled, e.g. blue, red and green LEDs. As shown here, the LEDs have some angular spread such that the emitted light beams become mixed within the light mixer prior to be guided into the light guide 101 via e.g. a curved shaped light reflecting means 903. As shown here, the light mixer may be considered as a light-guide without any out-coupling structure. It is preferred that the length of the light mixer 901 is such that it allows the emitted light beams to be mixed prior to be reflected into the light guide.

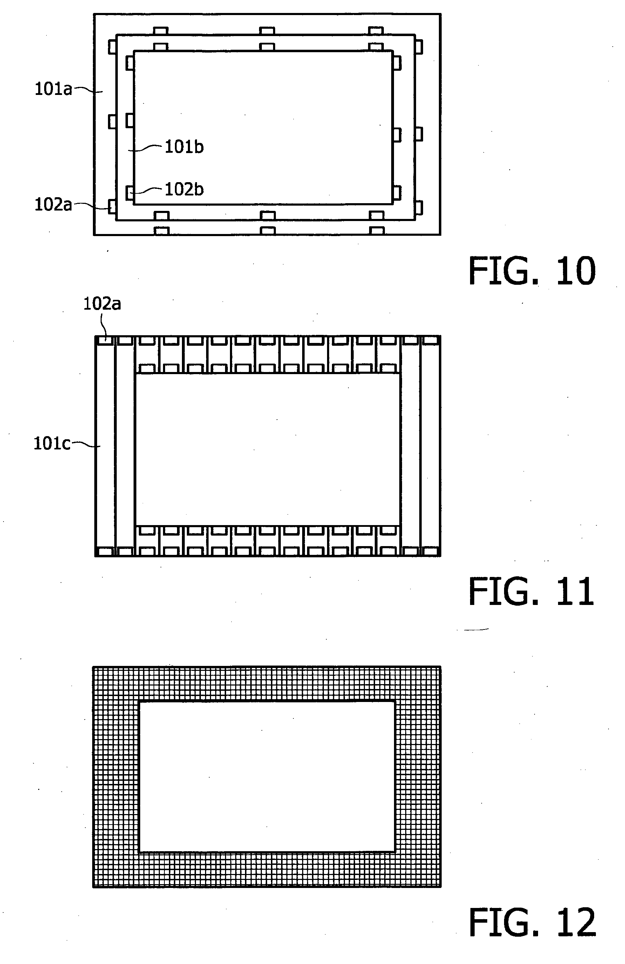

Figures 10-12 show varies embodiment of rim system 100 according to the present invention, where the rim system comprises two or more sub-light guides 101 mounted together and at least one controllable Light Emitting Diodes (LEDs) for emitting light of at least one wavelength coupled to each respective sub-light guide. In Fig. 10 the rim system is made of two (or more) symmetrical frame like light guides 101a, 101b attached together, where each frame comprises said light sources 102a, 102b. In Fig. 11, the light guides are vertical light guides 101c, attached together, and in Fig. 12 the light guides 101 are substantially square like. Thus, an array of sub-light guides can be formed, which makes the light guide more pixel-like.

Certain specific details of the disclosed embodiment are set forth for purposes of explanation rather than limitation, so as to provide a clear and thorough understanding of the present invention. However, it should be understood by those skilled in this art, that the present invention might be practiced in other embodiments that do not conform exactly to the details set forth herein. Further, in this context, and for the purposes of brevity and clarity, detailed descriptions of well-known apparatuses, circuits and methodologies have been omitted so as to avoid unnecessary detail and possible confusion.

Reference signs are included in the claims, however the inclusion of the reference signs is only for clarity reasons and should not be construed as limiting the scope of the claims.

## Claims

1. A rim system (100) for a display (105), comprising:
at least one controllable light source (102) adapted for emitting light beam (120) of at least one wavelength;
a light guide (101) having a geometry selected such that when mounted to the display (105) the light guide (101) forms a frame that peripherally surrounds the viewing region of the display (105), the light guide (101) comprising an inner (106) and
an outer (107) side and a front (108) and a back (109) side, the light guide (101) being adapted for guiding incoming light beam emitted by the light sources (102), the light guide comprising an out-coupling structure (103) for interacting with the light beam (120) guided within the light guide such that the light beam becomes extracted out of the front side (108) of the light guide (101),
at least one image analyzer (104a) for determining color information of the viewing region of the display (105);
a control unit (114) for utilizing the detected color information for controlling the emission color from the at least one controllable light source (102) such that the emission color corresponds to the detected color at the periphery viewing region of the display (105), wherein the at least one controllable light source (102) is coupled to the light guide (101) such that the emitted light beam (120) reaching the inner (106) and
the outer (107) sides from within the light guide becomes reflected under an oblique angle (119) with the respect to the inner and the outer sides; said control unit (114) is adapted to utilize the detected color
information to extend the present image on the frame to at least said light guide (10), so that the frame structure acts as an extension of the display image (105), wherein the rim system (100) further comprises controllable ambilight sources (130) placed at the outer side of the light guide (101) for emitting the light away from the rim system to the ambiance.

2. A rim system according to claim 1, further comprising a light reflecting means (300) placed adjacent to the back side (109) of the light guide (101).

3. A rim system according to claim 1, wherein the inner or the outer side of the light guide, or the combination thereof, is provided with a light reflecting means (121, 122).

4. A rim system according to claim 3, wherein the light reflecting means (121, 122) is selected from the group of:
a mirror;
a metallic coating;
a multilayer of dielectric materials.

5. A rim system according to claim 1, wherein the light guide (101) is made of transparent plastic material or glass having an index of refraction being is larger than that of the adjacent medium surrounding the light guide, the at least one controllable light source (102) being coupled to the rim system (100) such that the emitted light beam reaching the inner (106) and the outer (107) sides of the light guide becomes totally reflected.

6. A rim system according to claim 1, wherein the at least one controllable light source (102) comprises Light Emitting Diodes (LEDs), the system further comprising a light mixer (901) comprising a first end (902) into which at least two LEDs having different wavelengths are coupled and a second end (904) coupled to the light guide (101), the arrangement between the two or more LEDs and the first end being such that the light overlaps within the light guide prior to being conducted to the light guide via the second end.

7. A rim system according to claim 1, wherein the inner (106) or the outer side (107) of the light guide (101), or the combination thereof, is formed by repetition of wedge shaped structures comprising grooves (503) at the top of the structures in relation to the opposite side of the light guide (101) into which at least one light sources is integrated, the configuration of the light sources in the grooves being such that the emitted light from the light sources becomes reflected with at least one adjacent side (501) of the wedge shape structure into the light guide.

8. A rim system according to claim 1, wherein the shape of the inner or the outer side of the light guide, or both the inner and the outer side, is formed by step-wise structures formed by repetition of first (301) and second (302) surfaces, the placement of the at least one light source (102) comprising attaching the light sources to the first or the second surface.

9. A rim system according to claim 1, wherein the rim system (100) further comprises:
a memory (110) for storing a pre-defined amount of image frames;
a delay mechanism (111) for delaying the sending of the image frames to the display;
an image analyzer (104a) for determining color information from the stored image frames; and
a control unit (114) for utilizing the determined color information for extending the image to at least the light guide when displaying the images frames. information;

10. A rim system according to claim 1, wherein the rim system further comprises:
at least one ambiance analyzer (104b) for detecting the ambience color where the control unit (114) is further adapted for utilizing the detected display and ambience color information for controlling the emission color from the at least one light source (102) such that the emission colors are adapted to the display and the ambience color information.

11. A rim system according to claim 1, wherein the light guide (101) comprises two or more sub-light guides (101a, 101b) mounted together.

12. A rim system according to claim 1, wherein the out-coupling structure (103) is selected from the group of: an array of dots of white paint, an array of grooves.

13. A display system (105) comprising a rim system (100) according to claim 1 attached to the periphery of the display system (105).

## Patentansprüche

1. Randsystem (100) für eine Anzeige (105), umfassend:
mindestens eine steuerbare Lichtquelle (102), welche ausgestaltet ist, um einen Lichtstrahl (120) von mindestens einer Wellenlänge zu emittieren;
eine Lichtführung (101), welche eine Geometrie aufweist, die ausgewählt ist, so dass, wenn sie an der Anzeige (105) angebracht ist, die Lichtführung (101) einen Rahmen ausbildet, welcher den Sichtbereich der Anzeige (105) um den Umfang umgibt, wobei die Lichtführung (101) eine Innenseite (106) und eine Außenseite (107) und eine Vorderseite (108) und eine Rückseite (109) umfasst, wobei die Lichtführung (101) ausgestaltet ist, um den ankommenden Lichtstrahl, welcher durch die Lichtquellen (102) emittiert wird, zu führen, wobei die Lichtführung eine Auskopplungs-Struktur (103) umfasst, um mit dem Lichtstrahl (120) zusammenzuwirken, welcher in der Lichtführung geführt wird, so dass der Lichtstrahl aus der Vorderseite (108) der Lichtführung (101) extrahiert wird,
mindestens einen Bildanalysator (104a), um eine Farbinformation des Sichtbereichs der Anzeige (105) zu bestimmen;
eine Steuereinheit (114), um die erfasste Farbinformation zu verwenden, um die Emissionsfarbe von der mindestens einen steuerbaren Lichtquelle (102) zu steuern, so dass die Emissionsfarbe der erfassten Farbe an dem UmfangsSichtbereich der Anzeige (105) entspricht, wobei die mindestens eine steuerbare Lichtquelle (102) mit der Lichtführung (101) gekoppelt ist, so dass der emittierte Lichtstrahl (120) die Innenseite (106) und die Außenseite (107) aus der Lichtführung erreicht und unter einem schrägen Winkel (110) bezüglich der Innenseite und
der Außenseite reflektiert wird; wobei die Steuereinheit (114) ausgestaltet ist, um die erfasste Farbinformation zu verwenden, um das dargestellte Bild auf dem Rahmen zumindest zu der Lichtführung (101) zu erweitern, so dass die Rahmenstruktur als eine Erweiterung des Anzeigebildes (105) wirkt, wobei das Randsystem (100) darüber hinaus steuerbare Ambilight-Quellen (130) umfasst, welche an der Außenseite der Lichtführung (101) angeordnet sind, um das Licht weg von dem Randsystem zu der Umgebung zu emittieren.

2. Randsystem nach Anspruch 1, darüber hinaus Licht reflektierende Mittel (300) umfassend, welche neben der Rückseite (109) der Lichtführung (101) angeordnet sind.

3. Randsystem nach Anspruch 1, **dadurch gekennzeichnet, dass** die Innenseite oder die Außenseite der Lichtführung oder die Kombination davon mit Licht reflektierenden Mitteln (121, 122) versehen ist.

4. Randsystem nach Anspruch 3, **dadurch gekennzeichnet, dass** die Licht reflektierenden Mittel (121, 122) ausgewählt sind aus der Gruppe von:
einem Spiegel;
einer metallischen Beschichtung;
mehrlagigen dielektrischen Materialien.

5. Randsystem nach Anspruch 1, **dadurch gekennzeichnet, dass** die Lichtführung (101) aus einem transparenten Kunststoffmaterial oder Glas hergestellt ist, welches einen Brechungsindex aufweist, welcher größer als derjenige des benachbarten Mediums, welches die Lichtführung umgibt, ist, wobei die mindestens eine steuerbare Lichtquelle (102) mit dem Randsystem (100) gekoppelt ist, so dass der emittierte Lichtstrahl, welcher die Innenseite (106) und die Außenseite (107) der Lichtführung erreicht, vollständig reflektiert wird.

6. Randsystem nach Anspruch 1, **dadurch gekennzeichnet, dass** die mindestens eine steuerbare Lichtquelle (102) Licht emittierende Dioden (LEDs) umfasst, dass das System darüber hinaus einen Lichtmischer (901) umfasst, welcher ein erstes Ende (902), in welches mindestens zwei LEDs mit verschiedenen Wellenlängen gekoppelt sind, und ein zweites Ende (904), welches mit der Lichtführung (101) gekoppelt ist, umfasst, und dass die Anordnung zwischen den zwei oder mehreren LEDs und dem ersten Ende so beschaffen ist, dass sich das Licht in der Lichtführung überlagert, bevor es über das zweite Ende zu der Lichtführung geführt wird.

7. Randsystem nach Anspruch 1, **dadurch gekennzeichnet, dass** die Innenseite (106) oder die Außenseite (107) der Lichtführung (101) oder die Kombination davon durch eine Wiederholung von keilförmigen Strukturen ausgebildet ist, welche Vertiefungen (503) auf der Oberseite der Strukturen in Bezug auf die gegenüberliegende Seite der Lichtführung (101) umfassen, in welche zumindest eine Lichtquelle integriert ist, wobei die Konfiguration der Lichtquellen in den Vertiefungen beschaffen ist, so dass das emittierte Licht von den Lichtquellen durch mindestens eine benachbarte Seite (501) der keilförmigen Struktur in die Lichtführung reflektiert wird.

8. Randsystem nach Anspruch 1, **dadurch gekennzeichnet, dass** die Form der Innenseite oder der Außenseite der Lichtführung oder sowohl der Innenseite als auch der Außenseite durch stufenartige Strukturen ausgebildet ist, welche durch eine Wiederholung von ersten (301) und zweiten (302) Flächen ausgebildet ist, wobei das Anordnen der mindestens einen Lichtquelle (102) ein Anbringen der Lichtquellen an der ersten oder der zweiten Fläche umfasst.

9. Randsystem nach Anspruch 1, **dadurch gekennzeichnet, dass** das Randsystem (100) darüber hinaus umfasst:
einen Speicher (110), um eine vordefinierte Menge von Bildrahmen zu speichern;
einen Verzögerungsmechanismus (111), um das Senden der Bildrahmen zu der Anzeige zu verzögern;
einen Bildanalysator (1 04a), um eine Farbinformation aus den gespeicherten Bildrahmen zu bestimmen; und
eine Steuereinheit (114), um die bestimmte Farbinformation zu verwenden, um das Bild zumindest zu der Lichtführung zu erweitern, wenn die Bildrahmen dargestellt werden.

10. Randsystem nach Anspruch 1, **dadurch gekennzeichnet, dass** das Randsystem darüber hinaus umfasst:
mindestens einen Umgebungsanalysator (104b), um die Umgebungsfarbe zu erfassen, wobei die Steuereinheit (114) darüber hinaus ausgestaltet ist, um die erfasste Anzeige- und Umgebungsfarbinformation zu verwenden, um die Emissionsfarbe von der mindestens einen Lichtquelle (102) zu steuern, so dass die Emissionsfarben an die Anzeige- und die Umgebungsfarbinformation angepasst sind.

11. Randsystem nach Anspruch 1, **dadurch gekennzeichnet, dass** die Lichtführung (101) zwei oder mehrere Hilfs-Lichtführungen (101a, 101b), welche aneinander angebracht sind, umfasst.

12. Randsystem nach Anspruch 1, **dadurch gekennzeichnet, dass** die Auskupplungsstruktur (103) ausgewählt ist aus der Gruppe von: einer Anordnung von Punkten einer weißen Farbe, einer Anordnung von Vertiefungen.

13. Anzeigesystem (105), welches ein Randsystem (100) nach Anspruch 1 umfasst, das an den Umfang des Anzeigesystems (105) angebracht ist.

## Revendications

1. Système de bord (100) pour un afficheur (105), comprenant :
au moins une source de lumière pouvant être commandée (102) conçue pour émettre un faisceau de lumière (120) à au moins une longueur d'onde ;
un guide de lumière (101) ayant une géométrie sélectionnée de sorte que, lorsqu'il est monté sur l'afficheur (105), le guide de lumière (101) forme un cadre qui entoure de manière périphérique la région de visualisation de l'afficheur (105), le guide de lumière (101) comprenant des côtés intérieur (106) et extérieur (107) et des côtés avant (108) et arrière (109), le guide de lumière (101) étant conçu pour guider un faisceau de lumière entrant émis par les sources de lumière (102), le guide de lumière comprenant une structure de couplage de sortie (103) pour interagir avec le faisceau de lumière (120) guidé dans le guide de lumière de sorte que le faisceau de lumière soit extrait hors du côté avant (108) du guide de lumière (101),
au moins un analyseur d'image (104a) pour déterminer les informations de couleur de la région de visualisation de l'afficheur (105) ;
une unité de commande (114) pour utiliser les informations de couleur détectées pour commander la couleur d'émission de ladite au moins une source de lumière pouvant être commandée (102) de sorte que la couleur d'émission corresponde à la couleur détectée au niveau de la région de visualisation périphérique de l'afficheur (105), dans lequel ladite au moins une source de lumière pouvant être commandée (102) est couplée au guide de lumière (101) de sorte que le faisceau de lumière (120) émis atteignant les côtés intérieur (106) et extérieur (107) à partir du guide de lumière soit réfléchi selon un angle oblique (119) par rapport aux côtés intérieur et extérieur ; ladite unité de commande (114) est conçue pour utiliser les informations de couleur détectées pour étendre l'image actuelle sur le cadre au moins vers ledit guide de lumière (10), de sorte que la structure de cadre agisse en tant qu'extension de l'image d'affichage (105), dans lequel le système de bord (100) comprend en outre des sources de lumière ambiante pouvant être commandées (130) placées du côté extérieur du guide de lumière (101) pour émettre la lumière à distance du système de bord vers l'environnement ambiant.

2. Système de bord selon la revendication 1, comprenant en outre des moyens de réflexion de lumière (300) placés adjacents au côté arrière (109) du guide de lumière (101).

3. Système de bord selon la revendication 1, dans lequel le côté intérieur ou extérieur du guide de lumière, ou la combinaison de ceux-ci, est pourvu de moyens de réflexion de lumière (121, 122).

4. Système de bord selon la revendication 3, dans lequel les moyens de réflexion de lumière (121, 122) sont sélectionnés dans le groupe comprenant :
un miroir ;
un revêtement métallique ;
de multiples couches de matériaux diélectriques.

5. Système de bord selon la revendication 1, dans lequel le guide de lumière (101) est réalisé en une matière plastique transparente ou en du verre ayant un indice de réfraction qui est supérieur à celui du milieu adjacent entourant le guide de lumière, ladite au moins une source de lumière pouvant être commandée (102) étant couplée au système de bord (100) de sorte que le faisceau de lumière émis atteignant les côtés intérieur (106) et extérieur (107) du guide de lumière soit totalement réfléchi.

6. Système de bord selon la revendication 1, dans lequel ladite au moins une source de lumière pouvant être commandée (102) comprend des diodes électroluminescentes (DEL), le système comprenant en outre un mélangeur de lumière (901) comprenant une première extrémité (902) dans laquelle au moins deux DEL ayant différentes longueurs d'onde sont couplées et une deuxième extrémité (904) couplée au guide de lumière (101), l'agencement entre deux DEL ou plus et la première extrémité étant tel que la lumière se superpose dans le guide de lumière avant d'être conduite vers le guide de lumière par l'intermédiaire de la deuxième extrémité.

7. Système de bord selon la revendication 1, dans lequel le côté intérieur (106) ou extérieur (107) du guide de lumière (101), ou la combinaison de ceux-ci, est formé par une répétition de structures en forme de coins comprenant des rainures (503) en haut des structures en relation avec le côté opposé du guide de lumière (101) dans lesquelles au moins une source de lumière est intégrée, la configuration des sources de lumière dans les rainures étant telle que la lumière émise par les sources de lumière est réfléchie par au moins un côté adjacent (501) de la structure en forme de coin dans le guide de lumière.

8. Système de bord selon la revendication 1, dans lequel la forme du côté intérieur ou extérieur du guide de lumière, ou à la fois des côtés intérieur et extérieur, est formée par des structures étagées formées par la répétition de première (301) et deuxième (302) surfaces, le placement de ladite au moins une source de lumière (102) comprenant la fixation des sources de lumière à la première ou à la deuxième surface.

9. Système de bord selon la revendication 1, dans lequel le système de bord (100) comprend en outre :
une mémoire (110) pour mémoriser une quantité prédéfinie de trames d'image ;
un mécanisme à retard (111) pour retarder l'envoi des trames d'image à l'afficheur ;
un analyseur d'image (104a) pour déterminer des informations de couleur à partir des trames d'image mémorisées ; et
une unité de commande (114) pour utiliser les informations de couleur déterminées pour étendre l'image au moins vers le guide de lumière lors de l'affichage des trames d'images.

10. Système de bord selon la revendication 1, dans lequel le système de bord comprend en outre :
au moins un analyseur d'ambiance (104b) pour détecter la couleur d'ambiance,
dans lequel l'unité de commande (114) est en outre conçue pour utiliser les informations de couleur d'afficheur et d'ambiance détectées pour commander la couleur d'émission de ladite au moins une source de lumière (102) de sorte que les couleurs d'émission soient adaptées aux informations de couleur d'afficheur et d'ambiance.

11. Système de bord selon la revendication 1, dans lequel le guide de lumière (101) comprend deux guides de lumière secondaires (101a, 101b) ou plus montés ensemble.

12. Système de bord selon la revendication 1, dans lequel la structure de couplage de sortie (103) est sélectionnée dans le groupe comprenant : un réseau de points de peinture blanche, un réseau de rainures.

13. Système d'affichage (105) comprenant un système de bord (100) selon la revendication 1 fixé à la périphérie du système d'affichage (105).
